# FASCICULE DE BREVET EUROPEEN

(11) **EP 2 200 258 B1**
(45) Date de publication et mention de la délivrance du brevet: **19.11.2014**
(21) Numéro de dépôt: 09306251.1
(22) Date de dépôt: 17.12.2009
(51) Int. Cl.: H04L 29/08, G06Q 30/00

(54) **Procédé de distribution d'un contenu vers un utilisateur**
Verfahren zur Inhaltsverteilung zu einem Benutzer
Method for distributing content to a user

(30) Priorité: 18.12.2008 FR 0858785
(43) Date de publication de la demande: 23.06.2010
(73) Titulaire: Orange, 75015 Paris (FR)
(72) Inventeur: Stephan, Emile, 22560, PLEUMEUR BODOU (FR); Peltier, Jean francois, 22300, PLOUMILLIAU (FR)

(56) Documents cités:
- WO-A-00/54504
- WO-A-02/39745
- US-A1- 2007 083 611
- US-A1- 2008 250 327

## Description

L'invention concerne une technique de distribution d'un contenu vers un utilisateur.

L'invention se situe dans les domaines des télécommunications et plus particulièrement dans celui de la distribution de contenus.

Des méthodes permettant d'insérer dans un premier contenu multimédia un deuxième contenu multimédia, par exemple à des fins publicitaires, existent. Une telle méthode est décrite dans le document de brevet publié sous le numéro US2008/0201361. Elle comprend une première étape d'identification d'une information contextuelle à partir d'une ou de plusieurs parties du premier contenu multimédia, une étape de sélection d'un deuxième contenu en fonction de l'information contextuelle identifiée, une étape de détermination d'une position appropriée dans le premier contenu pour insérer le deuxième contenu et une étape d'insertion du deuxième contenu à la position déterminée du premier contenu. Dans un mode de réalisation particulier, une information contextuelle est un mot clé, déterminé par exécution d'un programme de reconnaissance vocale sur une partie sonore du premier contenu. Puis, à partir de ce mot clé, on sélectionne le deuxième contenu. En d'autres termes, on sélectionne un deuxième contenu à insérer dans un premier contenu en fonction d'un contexte associé au premier contenu.

Toutefois, le deuxième contenu est sélectionné uniquement en fonction de l'information contextuelle déterminée à partir du premier contenu. Mais, le premier contenu peut présenter différentes informations contextuelles en fonction des parties du premier contenu analysées. De plus, un même deuxième contenu est diffusé à tous les utilisateurs.

Le document US2008/0250327 décrit un procédé d'annotations d'un premier contenu par des utilisateurs, ces annotations étant utilisées ensuite pour déterminer un deuxième contenu à associer lors de la distribution du premier contenu.

Le document US2007/0083611 décrit un procédé de distribution d'un premier contenu vers un utilisateur, dans lequel un deuxième contenu associé lors de la distribution du premier contenu est sélectionné en fonction d'un contexte associé au premier contenu et/ou en fonction de l'utilisateur.

Un des buts de l'invention est de remédier à des insuffisances/inconvénients de l'état de la technique et/ou d'y apporter des améliorations.

L'invention est définie dans les revendications indépendantes. Des modes de réalisation préférés de l'invention sont définis dans les revendications dépendantes.

Selon un premier aspect, l'invention a pour objet un procédé de distribution d'un premier contenu vers un utilisateur, comprenant :
- une étape de collecte d'informations relatives à au moins une partie du premier contenu élaborées suite à une distribution du premier contenu à destination de deuxièmes utilisateurs ;
- une étape de détermination d'une donnée d'association relative au premier contenu à partir des informations collectées et de profils respectifs desdits deuxièmes utilisateurs, ladite donnée d'association associant pour un profil d'utilisateur donné, au moins une partie du premier contenu et un deuxième contenu à associer,
- une étape de détermination d'un deuxième contenu à associer à une partie du premier contenu en fonction d'un profil du premier utilisateur au moyen de ladite donnée d'association relative au premier contenu ;
- une étape de distribution du premier contenu, au cours de laquelle le deuxième contenu déterminé est associé à ladite partie dudit premier contenu.

Par profil d'utilisateur, on entend des centres d'intérêt particuliers des utilisateurs. Un utilisateur peut être intéressé par des domaines différents, tels que le sport, la gastronomie, les technologies, l'automobile,...

Une association d'un deuxième contenu à une partie d'un premier contenu peut aussi bien être temporelle que spatiale. Par exemple, dans le cas d'une distribution d'un contenu multimédia tel qu'un contenu vidéo, le deuxième contenu peut être associé dans le premier contenu à un instant donné correspondant à la partie du premier contenu. Toujours à titre d'exemple, le deuxième contenu peut être associé à une partie du premier contenu et affiché sur le terminal d'un utilisateur en tant que commentaire associé à la partie du premier contenu. Le second contenu peut être un contenu multimédia, un mélange de son, de texte, d'image et/ou d'information sensorielle qui se superpose ou se place à coté du premier contenu ou le décale, ou le remplace.

Ainsi, le deuxième contenu sélectionné est différent en fonction du profil de l'utilisateur souhaitant obtenir le premier contenu. De plus, pour un même premier contenu, on peut ainsi associer une pluralité de deuxièmes contenus conditionnellement aux profils des utilisateurs. Le procédé de distribution est ainsi dynamique et adapté aux utilisateurs. Par exemple, un utilisateur apportant un intérêt particulier au domaine automobile peut obtenir lors de la distribution du premier contenu un deuxième contenu, qui lui présente une nouveauté dans ce domaine.

De plus, le procédé permet de prendre en compte des informations suite à une distribution du premier contenu afin de constituer ou de mettre à jour des données d'association. La donnée d'association s'enrichit au fur et à mesure des distributions du premier contenu. Cet enrichissement permet d'obtenir des données d'association plus précises et plus fiables et ainsi de présenter un deuxième contenu plus adapté aux profils des utilisateurs.

Selon une caractéristique particulière, lors de l'étape de détermination de la donnée d'association relative au premier contenu, pour une partie donnée du premier contenu, on détermine un nombre d'occurrences par type d'informations collectées et par profil d'utilisateur, la donnée d'association étant définie conditionnellement au résultat d'une comparaison entre le nombre d'occurrences et un seuil prédéterminé.

Il est à noter que les appréciations sont émises par les utilisateurs eux-mêmes. Un utilisateur ayant acquis un droit d'accès au contenu se trouve dans une position privilégiée pour ajouter des appréciations sur le premier contenu par rapport à un distributeur du contenu. En effet, si le premier contenu est protégé par le fournisseur du contenu, le distributeur ne peut pas effectuer une analyse de celui-ci.

Il est ainsi possible de consolider les informations remontées en provenance de différents utilisateurs et à partir d'une pluralité d'informations, par exemple positives, de définir des données d'association.

Selon une autre caractéristique particulière, lors de l'étape de collecte, le deuxième utilisateur transmet des appréciations en tant qu'informations relatives à des parties du premier contenu.

Un utilisateur appartenant à une communauté d'intérêt peut transmettre ses appréciations par rapport à des parties du premier contenu. Ainsi, les appréciations peuvent non seulement être partagées dans la communauté d'intérêt mais également être utilisées afin d'élaborer les données d'association.

Selon une autre caractéristique particulière, lors de l'étape de collecte, un dispositif de distribution ayant distribué le premier contenu à destination dudit utilisateur transmet des informations de commande relatives à la distribution et transmises par l'utilisateur en tant qu'informations relatives à des parties données du premier contenu.

Les informations de commande lors de la distribution du premier contenu peuvent également fournir des informations exploitables pour définir des données d'association adaptées.

Selon un deuxième aspect, l'invention concerne un dispositif de distribution d'un premier contenu vers un utilisateur, comprenant :
- des moyens d'obtention d'un profil de l'utilisateur ;
- des moyens de détermination d'un deuxième contenu à associer à une partie du premier contenu en fonction du profil de l'utilisateur au moyen d'au moins une donnée d'association relative au premier contenu, ladite donnée d'association associant à un profil d'utilisateur, au moins une partie donnée du premier contenu et un deuxième contenu à associer ;
- des moyens de distribution du premier contenu, associant le deuxième contenu à la partie dudit premier contenu.

Selon un troisième aspect, l'invention concerne un serveur destiné à fournir un service d'association d'un deuxième contenu à une partie donnée d'un premier contenu, comprenant :
- des moyens de collecte d'informations relatives à au moins une partie d'un premier contenu élaborées suite à une distribution du premier contenu à destination d'un utilisateur ;
- des moyens de détermination d'une donnée d'association à partir d'informations collectées, agencés pour déterminer une donnée d'association relative à un contenu à partir des informations collectées et de profils respectifs des utilisateurs, une donnée d'association associant à un profil d'utilisateur, au moins une partie donnée du contenu et un deuxième contenu à associer.

Selon un quatrième aspect, l'invention concerne un système de distribution d'un premier contenu à destination d'un premier utilisateur comprenant un serveur destiné à fournir un service d'association d'un deuxième contenu à une partie du premier contenu et un dispositif de distribution d'un premier contenu tels que décrits précédemment.

Selon un cinquième aspect, l'invention concerne un programme d'ordinateur comportant des instructions pour obtenir un profil de l'utilisateur, pour déterminer un deuxième contenu à associer à une partie du premier contenu en fonction du profil de l'utilisateur au moyen d'au moins une donnée d'association relative au premier contenu, ladite donnée d'association associant à un profil d'utilisateur, au moins une partie donnée du premier contenu et un deuxième contenu à associer et pour distribuer le premier contenu, en associant le deuxième contenu à la partie dudit premier contenu, mises en oeuvre, par un dispositif de distribution de contenus, lorsque ce programme est exécuté par un processeur.

Selon un sixième aspect, l'invention concerne un programme d'ordinateur comportant des instructions pour collecter des informations relatives à au moins une partie d'un premier contenu élaborées suite à une distribution du premier contenu à destination d'un utilisateur et pour déterminer une donnée d'association à partir d'informations collectées, agencés pour déterminer une donnée d'association relative à un contenu à partir des informations collectées et de profils respectifs des utilisateurs, une donnée d'association associant à un profil d'utilisateur, au moins une partie donnée du contenu et un deuxième contenu à associer, mises en oeuvre par un serveur, lorsque ce programme est exécuté par un processeur.

L'invention sera mieux comprise à l'aide de la description suivante d'un mode de réalisation particulier du procédé de l'invention, en référence aux dessins annexés sur lesquels :
- la figure 1 représente un système de distribution de contenus dans son environnement selon un mode particulier de réalisation de l'invention ;
- la figure 2 représente un schéma simplifié des étapes du procédé de distribution selon un mode particulier de réalisation de l'invention ;
- la figure 3 représente un dispositif de distribution de contenus selon un mode particulier de réalisation de l'invention ;
- la figure 4 représente un serveur selon un mode particulier de réalisation de l'invention.

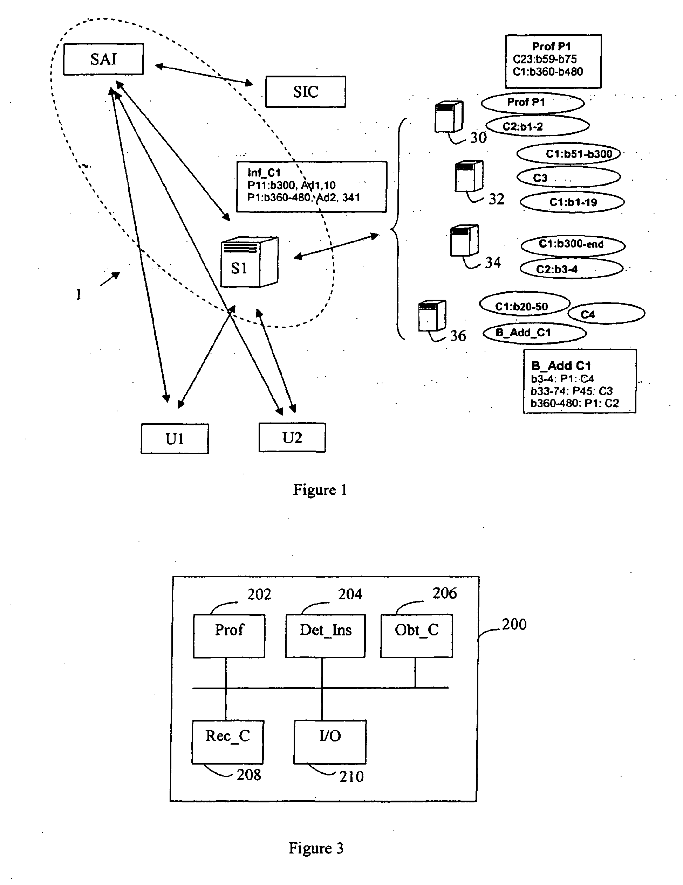

Un système 1 de distribution de contenus dans son environnement va être décrit en relation avec la figure 1 selon un mode particulier de réalisation.

Le système 1 de distribution de contenus comprend un premier serveur S1 de distribution de contenus à destination d'une pluralité d'utilisateurs U1, U2. Les contenus à distribuer sont répartis sur des serveurs de contenus 30, 32, 34, 36. Le premier serveur S1 de distribution et les serveurs de contenus 30, 32, 34, 36 constituent une partie d'un réseau de distribution de contenu CDN ou "Content Delivery Network" en anglais. Un réseau CDN est constitué de serveurs reliés en réseau à travers un réseau de communication de type Internet ou tout autre type de réseau, par exemple un réseau mobile. Ces serveurs coopèrent afin de mettre à disposition des utilisateurs du contenu multimédia ou des données. Les serveurs coopèrent entre eux afin de satisfaire des requêtes émises par des utilisateurs en vue d'un accès à un contenu ou à des données et distribuent aux utilisateurs le contenu ou les données en retour. L'article "A taxonomy and survey of Content Delivery Networks" de M. Pathan et al., Technical Report, GRIDS-TR-2007-4, Grid Computing and Distributed Systems Laboratory, The University of Melbourne, Australia. 12 February, 2007, présente un état de l'art de ce type de réseau. Il est bien entendu que seule une partie du réseau CDN utilisée dans le cadre de la description de ce mode de réalisation est représentée sur la figure 1.

Sur la figure 1 sont représentés à titre indicatif des contenus C1, C2, C3, C4 répartis sur ces différents serveurs de contenus 30, 32, 34, 36. Les contenus peuvent être de différents types. Il peut s'agir de contenus diffusés en temps réel, de contenus multimédias susceptibles d'être obtenus à la demande, de contenus multimédias susceptibles d'être diffusés en mode de lecture en continu ou "streaming" en anglais, de contenus d'actualités au format RSS, de livres multimédias... On considère par la suite que les contenus sont divisés en blocs élémentaires. Un contenu peut être réparti sur différents serveurs. Un numéro de bloc du contenu permet d'identifier un bloc donné du contenu.

Le serveur de contenus 30 comprend une donnée relative au profil d'utilisateur P1 notée "Prof P1" et les blocs b1 et b2 du contenu C2. La donnée relative au profil d'utilisateur P1 "Prof P1" est constituée de deux lignes d'informations relatives à un profil d'utilisateur P1. La première ligne "C23:b59-b75" indique que les blocs b59 à b75 du contenu C23 présentent un intérêt particulier pour les utilisateurs de profil P1 et la deuxième ligne "C1:b360-b480" indique qu'il en est de même pour les blocs b360 à b480 du contenu C1.

Le serveur de contenus 32 comprend les blocs b51 à b300 du contenu C1, le contenu C3, les blocs b1 à b19 du contenu C1.

Le serveur de contenus 34 comprend les blocs b300 jusqu'au dernier bloc du contenu C1 et les blocs b3 et b4 du contenu C2.

Le serveur de contenus 36 comprend les blocs b20 à b50 du contenu C1, le contenu C4 et un bloc de données d'association associé au contenu C1, noté "B_Add_C1". Ce bloc de données d'association comprend des données d'association relatives au contenu C1. Une donnée d'association associe à un profil d'utilisateur une partie donnée, autrement dit une séquence de blocs, du contenu C1 et un autre contenu à associer. Le bloc de données d'association B_Add_C1 représenté sur la figure 1 comprend trois lignes : la première ligne indique qu'à la séquence de blocs déterminée par les blocs b3 à b4 du contenu C1, on associe le contenu C4 pour les utilisateurs de profils P1, la deuxième ligne indique qu'à la séquence de blocs déterminée par les blocs b33 à b74 du contenu C1, on associe le contenu C3 pour les utilisateurs de profils P45 et la troisième ligne indique qu'à la séquence de bloc déterminée par les blocs b360 à b480 du contenu C1, on associé le contenu C2 pour les utilisateurs de profils P1.

Le serveur de distribution de contenus S1 comprend une information de synthèse Inf_C1 associée au contenu C1. La création, la mise à jour et l'utilisation de cette information de synthèse est décrite ultérieurement en relation avec la description du procédé.

Le système 1 comprend également un deuxième serveur SAI, agencé pour fournir un service d'association d'un deuxième contenu C2 à un premier contenu C1 à distribuer et pour obtenir, en provenance des utilisateurs ayant reçu le contenu C1 distribué, des appréciations relatives à des séquences de blocs données du contenu C1 distribué et pour obtenir en provenance du serveur de distribution de contenus S1, des informations de commande de distribution transmises par un utilisateur lors de la distribution du contenu.

Il est souligné ici que la répartition des contenus, des blocs de données, des informations de synthèse n'est donnée qu'à titre d'exemple illustrant la mise en oeuvre du procédé de distribution.

Un troisième serveur SIC est agencé pour obtenir du deuxième serveur SAI des informations de synthèse relatives à un contenu C1 et pour définir des conditions d'association du deuxième contenu C2.

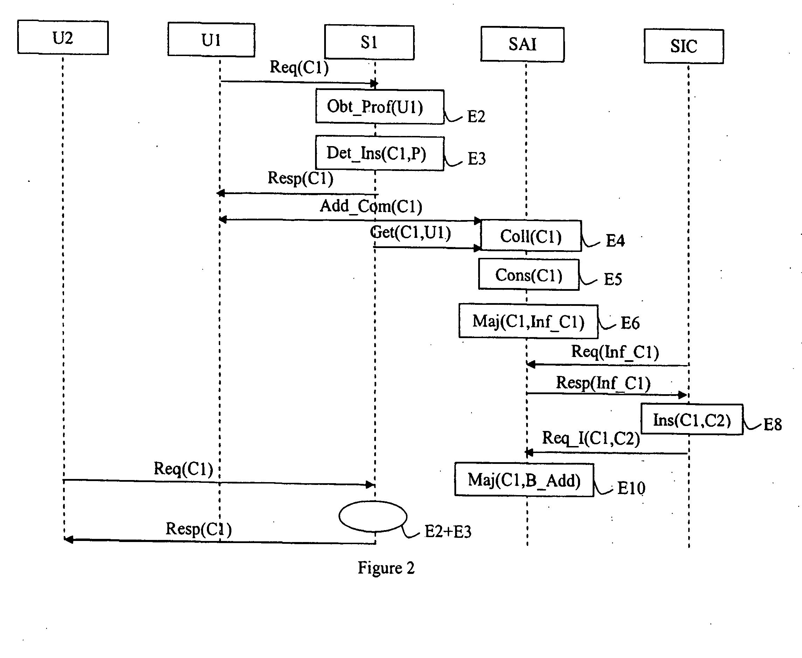

Les différentes étapes du procédé de distribution selon un mode particulier de réalisation de l'invention vont maintenant être décrites en relation avec la figure 2. Il est à noter qu'elles ne sont pas toutes représentées sur la figure 2 afin de ne pas la complexifier.

On se place dans un cas où le bloc de données d'association B_Add_C1 comprend les données décrites précédemment en référence à la figure 1.

L'utilisateur U1 de profil d'utilisateur P1 requiert une distribution du contenu C1 au premier serveur de distribution de contenus S1 par un message Req(C1).

Dans une étape E2 d'obtention du profil d'utilisateur, le serveur de distribution de contenus S1 obtient auprès du serveur SAI le profil de l'utilisateur U1.

A titre d'exemple, l'utilisateur U1 a pour profil d'utilisateur P1.

Puis, dans une étape E3 de détermination de contenu à associer, le serveur de distribution S1 détermine en fonction du profil de l'utilisateur U1 une ou des données à associer lors de la distribution du contenu C1. Plus précisément, le serveur de distribution S1 obtient du serveur de contenus 36 le bloc de données d'association B_Add_C1 associé au contenu C1. Puis, le serveur de distribution S1 détermine à l'aide du bloc de données d'association B_Add_C1 et en fonction du profil de l'utilisateur P1 une ou des données d'association. Dans l'exemple décrit, deux données d'association sont extraites du bloc de données d'association B_Add C1:
- une première demandant une association du contenu C4 à la séquence de blocs donnée correspondant aux blocs b3 et b4 du contenu C1 ;
- une deuxième demandant une association du contenu C2 à la séquence de blocs donnée correspondant aux blocs b360 à b480 du contenu C1.

Toujours dans l'étape E3 de détermination de contenu à associer, le serveur de distribution de contenus S1 obtient :
- pour le contenu C1, à partir du serveur de contenus 32 les blocs b1 à b19, du serveur de contenus 36 les blocs b20 à b50, du serveur de contenus 32 les blocs b51 à b300, du serveur de contenus 34 les blocs b300 jusqu'au dernier ;
- pour le contenu C2 à associer aux blocs b360 à b480 du contenu C1, à partir du serveur de contenus 30 les blocs b1 et b2 et à partir du serveur de contenus 34 les blocs b3 et b4 ;
- le contenu C4 à associer aux blocs b3 et b4 du contenu C1, à partir du serveur de contenus 36.

Puis, le contenu C1 auquel les contenus C2 et C4 sont associés aux séquences de blocs requises est distribué à l'utilisateur U1, cette étape étant représentée sur la figure 2 par un message noté Resp(C1). Par exemple, lorsqu'il s'agit d'une diffusion en temps réel d'un contenu multimédia, les contenus C2 et C4 sont insérés à des instants donnés respectifs choisis dans les séquences de blocs respectives. Il s'agit alors d'une association temporelle des contenus C2 et C4. Toujours à titre d'exemple, il peut s'agir d'une association spatiale des contenus C2 et C4, ces derniers apparaissant en tant que commentaires des séquences de blocs respectives.

Ainsi, il est possible de distribuer un contenu auquel différents contenus sont associés, ces différents contenus étant sélectionnés en fonction d'un profil de l'utilisateur à l'attention duquel le contenu distribué est destiné.

Suite à la distribution du contenu C1 à l'utilisateur C1, des étapes de mise à jour du bloc de données d'association associé au contenu C1 sont exécutées.

Dans un premier temps, le serveur SAI met en oeuvre une étape E4 de collecte d'informations relatives à des instants donnés du contenu C1 élaborées suite à une distribution de ce contenu à destination de l'utilisateur. Le serveur SAI transmet à destination de l'utilisateur U1 des métadonnées associées au contenu C1. Dans ces métadonnées, le contenu est découpé en blocs et peut comprendre des annotations ou des appréciations relatives à des blocs ou à des séquences de blocs déjà transmises par d'autres utilisateurs. On comprendra que les séquences de blocs ne sont pas définies de façon statique. Par exemple, il est possible, pour une séquence de blocs présentant un nombre important d'annotations, de fragmenter cette séquence de blocs en une pluralité de séquences de blocs de tailles inférieures.

L'utilisateur U1 transmet au serveur SAI des annotations ou appréciations relatives à des blocs ou à des séquences de blocs du contenu C1. Ces appréciations peuvent être de différents types. A titre d'exemple, il peut s'agir d'appréciations positives, l'utilisateur U1 ayant apprécié une certaine partie du contenu C1. Il peut au contraire s'agir d'appréciations négatives ou mitigées. Il peut également s'agir de commentaires textuels à destination des autres utilisateurs. Ces appréciations sont mémorisées dans les métadonnées associées au contenu C1 et peuvent être accédées ultérieurement par d'autres utilisateurs. Il s'agit d'un service interactif d'association d'appréciations à des contenus fourni par le serveur SAI. Dans le cas où le contenu C1 est protégé par le fournisseur du contenu, l'utilisateur, ayant obtenu un droit d'accès à ce contenu C1, est capable d'identifier des blocs présentant selon lui un intérêt particulier et ainsi d'ajouter des appréciations ou des commentaires associés au contenu C1. Un distributeur du contenu, lorsque ce dernier est protégé, n'est pas capable d'identifier des blocs particuliers.

Le serveur SAI obtient également des informations de commande émises par l'utilisateur U1 lors de la distribution du contenu C1. A titre d'exemple, il est possible d'observer sur une interface entre l'utilisateur U1 et le serveur de distribution S1 des commandes de type protocole RTSP (pour "Real Time Streaming Protocol"), telles que des Pause, des retours arrière, des avances rapides, ...

Cette étape E4 de collecte peut être mise en oeuvre pour un ou plusieurs utilisateurs ayant reçu le contenu C1 avant d'exécuter une étape E5 de consolidation des informations collectées. L'étape E5 de consolidation peut par exemple être exécutée de façon périodique. Il est également possible d'exécuter cette étape E5 de consolidation lorsqu'un nombre prédéterminé d'étapes E4 de collecte a été effectué.

Dans cette étape E5 de consolidation, à partir des appréciations et des informations de commande collectées pour un ou plusieurs utilisateurs, le serveur SAI élabore une information de synthèse. Par souci de clarté, on décrit l'étape de consolidation avec un exemple simple. Elle est généralisable à des consolidations complexes telles que des méthodes empiriques, par exemple telles que décrites dans l'article "System Usage behavior as a proxy for user satisfaction : an empirical investigation" de C. Downing, ou combinant des méthodes connues de l'état de l'art d'analyse de flux de données ou "data streaming" et des systèmes experts. Par exemple, le serveur SAI détermine un nombre d'occurrences par type d'informations collectées et par profil d'utilisateur. Puis, dans une étape E6 de gestion, l'information de synthèse Inf_C1 est alors créée ou mise à jour en fonction du nombre d'occurrences déterminé. L'information de synthèse Inf_C1 associée au contenu C1, telle que représentée sur la figure 2, comprend deux lignes : une première ligne indiquant que le type d'information collecté Ad1 est présent pour le bloc b300 et pour dix utilisateurs de profil P11, une deuxième ligne indiquant que le type d'information collectée Ad2 est présent pour les blocs b360 à b480 et pour 341 utilisateurs de profil P1. Le serveur SAI crée ou met à jour la donnée relative au profil P1 "Prof P1"en indiquant que les blocs b360 à b480 du contenu C1 présentent un intérêt particulier.

Puis, dans une étape E8 de détermination de données d'association, on détermine à partir de l'information de synthèse Inf_C1 des données d'association relatives au contenu C1.

Dans le mode de réalisation décrit ci-après, cette étape E8 est mise en oeuvre par le serveur SIC.

Le serveur SIC obtient auprès du serveur SAI l'information de synthèse Inf_C1 associée au contenu C1, par exemple par requête explicite Req(Inf_C1). Cette acquisition est déclenchée sur des critères qui sont propres au serveur SIC.

Le serveur SAI transmet alors au serveur SIC l'information de synthèse Inf_C1 associée au contenu C1 dans un message Resp(Inf_C1).

Lors de l'étape E8, le serveur SIC détermine une ou des données d'association relatives au contenu C1. Par exemple, une donnée d'association est définie en fonction du résultat d'une comparaison du nombre d'occurrences d'un type d'informations avec un seuil prédéterminé. Pour l'information de synthèse Inf_C1 telle que décrite précédemment, le type d'informations Ad2 est présent pour les blocs b360 à b480 et pour 341 utilisateurs de profil P1. Ce type d'information Ad2 étant par exemple une appréciation positive, les utilisateurs de profil P1 ayant apprécié ce passage du contenu C1, le serveur SIC détermine que le nombre d'occurrences est supérieur à un premier seuil relatif aux appréciations positives et demande une association du contenu C2 pour la séquence de blocs déterminée par les numéros de bloc b360 à b480 du contenu C1 et pour les utilisateurs de profil P1. Le serveur SIC sélectionne également le contenu C2 à associer en fonction du profil d'utilisateur associé au type d'information. Toujours à titre d'exemple, en cas d'appréciation négative, le serveur SIC détermine que le nombre d'occurrences est inférieur à un deuxième seuil relatif aux appréciations négatives et demande une association du contenu C2 pour la séquence de blocs déterminée. Dans une variante, le serveur SIC vérifie également dans cette étape E8 de détermination de données d'association les appréciations émises sur des séquences de bloc comprenant les blocs voisins. Par exemple, pour une séquence de blocs comportant un nombre important d'appréciations positives, si des appréciations négatives sont émises sur des blocs qui précédent immédiatement la séquence de blocs considérée, il n'est pas opportun de créer une donnée d'association.

La mise en oeuvre des étapes E5, E6, E8 permet ainsi de déterminer une donnée d'association relative au premier contenu à partir des informations collectées et de profils respectifs desdits deuxièmes utilisateurs.

Le serveur SIC transmet cette demande d'association du contenu C2 au contenu C1 au serveur SAI dans un message Req_I(C1,C2) comprenant la séquence de blocs et le profil d'utilisateur.

Dans une étape E10, le serveur SAI définit ou met à jour le bloc de données d'association B_Add_C1. Par exemple, les échanges précédents ont conduit à la création de la donnée d'association correspondant à la troisième ligne du bloc de données d'association représenté sur la figure 1. Si le contenu C2 n'est pas disponible dans le réseau CDN, le serveur SAI obtient ce contenu et l'injecte ensuite dans le réseau CDN au moyen des fonctions "ingest" et de distribution des réseaux de type CDN qui permet de publier et de stocker des contenus. L'utilisation d'un réseau de type CDN permet le cas échéant de fournir un deuxième contenu C2 adapté en fonction de la localisation de l'utilisateur.

Ultérieurement, lorsqu'un utilisateur U2 de profil P1 requiert au serveur de distribution de contenus S1 une distribution du contenu C1, le serveur S1 met de nouveau en oeuvre les étapes E2 et E3 afin de fournir à l'utilisateur U2 le contenu C1 auquel le contenu C2 est associé à la séquence de blocs donnée définie dans la donnée d'association.

En option, le serveur S1 peut transmettre au serveur SAI des informations relatives au nombre de distributions du contenu C1 auquel le contenu C2 a été associé. Ceci permet de fournir un retour sur les associations effectives du contenu C2 en vue d'une facturation pour l'utilisation du service d'association de contenu.

Les échanges entre les différents serveurs peuvent être effectués conformément au protocole WSDL pour "Web Services Description Language".

Dans une variante au mode de réalisation décrit, seul le deuxième serveur SAI est présent et met en oeuvre l'étape E8 de détermination de données d'association.

Dans encore une autre variante, lors de l'étape E8 de détermination de données d'association, le serveur SIC transmet au serveur SAI une requête d'association d'un contenu C2 pour un profil d'utilisateur. Le serveur SAI détermine alors au moyen de la donnée relative au profil d'utilisateur P1 "Prof P1" l'ensemble des contenus concernés et de leurs séquences de blocs respectives et met à jour les données d'association associés aux contenus concernés. Par exemple, au moyen de la donnée relative au profil d'utilisateur P1 "Prof P1" telle que décrite précédemment et représentée sur la figure 1, le serveur SAI met à jour la donnée d'association associée au contenu C23 pour commander une association du contenu C2 à la séquence de blocs déterminée par les blocs b59 à b75 et la donnée d'association associée au contenu C1 pour commander une association du contenu C2 à la séquence de blocs déterminée par les blocs b360 à b480.

La description a été faite à l'aide d'un profil d'utilisateur simple. Il est facilement adaptable à des profils utilisateur complexes, correspondant à une combinaison pondérée de différentes sensibilités. Ainsi, lors de l'étape E3, on détermine des contenus à associer pour les différentes sensibilités lorsqu'elles sont supérieures à un seuil de sensibilité.

La description a été faite pour des informations collectées comprenant un premier type d'informations, les appréciations émises par les utilisateurs et un deuxième type d'informations, les informations de commande. Des variantes à ce mode particulier de réalisation comprenant l'un ou l'autre de ces deux types sont également prévues.

Le profil d'utilisateur peut être obtenu soit dans la requête d'accès au contenu C1, soit dans une phase d'enregistrement au service d'association, soit mémorisé par un des serveurs et partagé entre eux.

Dans une autre variante, le terminal de l'utilisateur fait partie du réseau CDN et assure la fonction du serveur de distribution de contenus S1 pour la mise en oeuvre du procédé de distribution. Il peut également mémoriser une partie des différents contenus. Dans ce cas, le retour sur l'association effective du contenu C2 en vue d'une facturation pour l'utilisation du service d'association de contenu est plus fiable puisqu'il est transmis par le terminal lui-même.

Dans encore une autre variante, il est possible d'associer le deuxième contenu uniquement pour des utilisateurs qui ne sont pas abonnés au service de distribution de contenus.

La description a été faite dans le cas d'un réseau de type CDN. Le procédé est également applicable à tout réseau de communication de type Internet.

Nous allons maintenant décrire un dispositif de distribution de contenus 200 selon un mode particulier de réalisation en relation avec la figure 3.

Le dispositif 200 de distribution de contenus comprend :
- un module 210 d'entrée-sortie, agencé pour communiquer avec des utilisateurs et d'autres serveurs ;
- un module 202 d'obtention du profil d'un utilisateur ;
- un module 204 de détermination d'un deuxième contenu à associer à une partie d'un premier contenu, agencé pour déterminer le deuxième contenu à associer et la partie du premier contenu en fonction du profil de l'utilisateur au moyen d'au moins une donnée d'association relative au premier contenu, une donnée d'association associant à un profil d'utilisateur, au moins une partie donnée du premier contenu et une deuxième contenu à associer ;
- un module 206 d'obtention de contenus, agencé pour obtenir un contenu à distribuer ;
- un module 208 d'observation d'informations de commande, émises par un utilisateur lors d'une distribution d'un contenu.

Le module 210 est agencé pour distribuer un deuxième contenu associé à une partie donnée d'un premier contenu.

De plus, suite à une distribution d'un contenu, le module 210 est agencé pour transmettre au serveur SAI les informations de commande observées.

Dans un mode de réalisation, le dispositif 200 de distribution de contenus est compris dans un serveur S1 de distribution de contenus appartenant à un réseau de communication.

Dans un autre mode de réalisation, le dispositif 200 de distribution de contenus est compris dans un terminal d'un utilisateur.

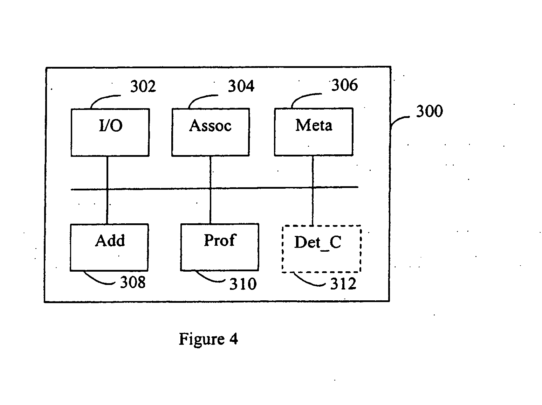

Un serveur SAI 300, tel que représenté sur la figure 4, comprend :
- un module 302 d'entrée-sortie, agencé pour communiquer avec des utilisateurs et d'autres serveurs ;
- un module 310 d'obtention d'un profil d'un utilisateur ;
- un module 304 d'association d'appréciations et de commentaires, agencé pour associer à un contenu des appréciations émises par un utilisateur, auquel le contenu a été distribué ;
- un module 306 de détermination d'une information de synthèse associée à un contenu, agencé pour déterminer à partir des appréciations d'utilisateurs et d'informations de commande une information de synthèse ;
- un module 308 de gestion de blocs additionnels, agencé pour déterminer une donnée d'association relative à un contenu, une donnée d'association associant à un profil d'utilisateur, au moins une partie donnée du contenu et un deuxième contenu à associer.

Dans un mode de réalisation, le module 308 obtient d'un autre serveur SIC une commande d'association d'un deuxième contenu à une partie donnée.

Dans un autre mode de réalisation, le serveur SAI comprend un module 312 de détermination d'une association, agencé pour déterminer un deuxième contenu à associer à une partie donnée d'un premier contenu à partir d'une information de synthèse associée au premier contenu.

Les modules et sous-modules 202, 204, 206, 208 du dispositif 200 de distribution de contenus sont agencés pour mettre en oeuvre celles des étapes du procédé de distribution de contenu précédemment décrit exécutées par le dispositif de distribution de contenus. Il s'agit de préférence de modules logiciels comprenant des instructions logicielles pour faire exécuter celles des étapes du procédé de distribution précédemment décrit, mises en oeuvre par un dispositif de distribution de contenus. L'invention concerne donc aussi :
- un programme pour dispositif de distribution de contenus, comprenant des instructions de programme destinées à commander l'exécution de celles des étapes du procédé de distribution précédemment décrit qui sont exécutées par ledit dispositif, lorsque ledit programme est exécuté par un processeur de celui-ci ;
- un support d'enregistrement lisible par un dispositif de distribution de contenus sur lequel est enregistré le programme pour dispositif de distribution de contenus.

Les modules et sous-modules 304, 306, 308, 310 du serveur SAI 300 sont agencés pour mettre en oeuvre celles des étapes du procédé de distribution de contenu précédemment décrit exécutées par le serveur SAI. Il s'agit de préférence de modules logiciels comprenant des instructions logicielles pour faire exécuter celles des étapes du procédé de distribution précédemment décrit, mises en oeuvre par un serveur. L'invention concerne donc aussi :
- un programme pour serveur, comprenant des instructions de programme destinées à commander l'exécution de celles des étapes du procédé de distribution de contenus précédemment décrit qui sont exécutées par ledit serveur, lorsque ledit programme est exécuté par un processeur de celui-ci ;
- un support d'enregistrement lisible par un serveur sur lequel est enregistré le programme pour serveur.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de distribution d'un premier contenu (C1) vers un premier utilisateur (U1,U2), un profil d'utilisateur comprenant au moins un centre d'intérêt pour ledit utilisateur, ledit procédé comprenant :
- une étape (E4) de collecte d'informations relatives à au moins une partie du premier contenu élaborées suite à une distribution du premier contenu à destination de deuxièmes utilisateurs ;
- une étape de consolidation (E5, E6) des informations collectées en une information de synthèse associée au premier contenu, indiquant pour au moins une partie du premier contenu, qu'un type d'informations collectées est présent pour un nombre de deuxièmes utilisateurs de profil identique ;
- une étape (E8) de détermination d'une donnée d'association relative au premier contenu, en fonction du résultat d'une comparaison, avec un seuil, du nombre d'occurrences du type d'informations collectées indiqué par l'information de synthèse comme étant présent pour un nombre de deuxièmes utilisateurs de profil identique, ladite donnée d'association associant, pour un profil d'utilisateur donné, ladite partie du premier contenu et un deuxième contenu à associer,
- une étape (E3) de détermination d'un deuxième contenu (C2) à associer à une partie du premier contenu en fonction d'un profil du premier utilisateur au moyen de ladite donnée d'association relative au premier contenu ;
- une étape de distribution du premier contenu, au cours de laquelle le deuxième contenu déterminé est associé à ladite partie dudit premier contenu.

2. Procédé de distribution selon la revendication 1, dans lequel, lors de l'étape de détermination de la donnée d'association relative au premier contenu, pour une partie donnée du premier contenu, on détermine un nombre d'occurrences par type d'informations collectées et par profil d'utilisateur, la donnée d'association étant définie conditionnellement au résultat d'une comparaison entre le nombre d'occurrences et un seuil prédéterminé.

3. Procédé de distribution selon la revendication 1, dans lequel lors de l'étape de collecte, les deuxièmes utilisateurs transmettent des appréciations en tant qu'informations relatives à des parties du premier contenu.

4. Procédé de distribution selon la revendication 1, dans lequel lors de l'étape de collecte, un dispositif de distribution ayant distribué le premier contenu à destination d'un desdits deuxièmes utilisateurs transmet des informations de commande relatives à la distribution et transmises par ledit deuxième utilisateur en tant qu'informations relatives à des parties données du premier contenu.

5. Système (1) de distribution d'un premier contenu à destination d'un premier utilisateur, un profil d'utilisateur comprenant au moins un centre d'intérêt pour dit utilisateur, ledit système comprenant :
- des moyens (304) de collecte d'informations relatives à au moins une partie d'un premier contenu élaborées suite à une distribution du premier contenu à destination de deuxièmes utilisateurs ;
- des moyens de consolidation (306) des informations collectées en une information de synthèse associée au premier contenu, indiquant pour au moins une partie du premier contenu, qu'un type d'informations collectées est présent pour un nombre de deuxièmes utilisateurs de profil identique ;
- des moyens (308) de détermination d'une donnée d'association, agencés pour déterminer une donnée d'association relative à au premier contenu en fonction du résultat d'une comparaison, avec un seuil, du nombre d'occurrences du type d'informations collectées indiqué par l'information de synthèse comme étant présent pour un nombre de deuxièmes utilisateurs de profil identique, ladite donnée d'association associant, pour un profil d'utilisateur donné, ladite partie du contenu et un deuxième contenu à associer ;
- des moyens (202) d'obtention d'un profil du premier utilisateur ;
- des moyens (204) de détermination d'un deuxième contenu à associer à une partie du premier contenu en fonction du profil du premier utilisateur au moyen de la donnée d'association relative au premier contenu ;
- des moyens de distribution du premier contenu, agencés pour distribuer le premier contenu et le deuxième contenu associé à la partie dudit premier contenu.

6. Système de distribution selon la revendication 5, dans lequel un serveur (SAI,300) destiné à fournir un service d'association d'un deuxième contenu à une partie donnée d'un premier contenu comprend :
- les moyens (304) de collecte d'informations ;
- les moyens (306) de consolidation des informations collectées en une information de synthèse associée au premier contenu ;
- les moyens (308) de détermination d'une donnée d'association.

7. Système de distribution selon la revendication 5, dans lequel un dispositif (S1,200) de distribution d'un premier contenu vers un utilisateur comprend :
- les moyens (202) d'obtention d'un profil de l'utilisateur ;
- les moyens (204) de détermination d'un deuxième contenu à associer à une partie du premier contenu en fonction du profil de l'utilisateur au moyen d'au moins une donnée d'association relative au premier contenu, ;
- les moyens de distribution du premier contenu.

## Patentansprüche

1. Verfahren zur Verteilung eines ersten Inhalts (C1) an einen ersten Benutzer (U1, U2), wobei ein Benutzerprofil mindestens ein Interessengebiet für den Benutzer enthält, wobei das Verfahren enthält:
- einen Schritt (E4) des Sammelns von Informationen betreffend mindestens einen Teil des ersten Inhalts, die nach einer Verteilung des ersten Inhalts an zweite Benutzer erarbeitet werden;
- einen Schritt (E5, E6) der Konsolidierung der gesammelten Informationen in einer dem ersten Inhalt zugeordneten Syntheseinformation, die für mindestens einen Teil ersten Inhalts anzeigt, dass eine Art von gesammelten Informationen für eine Anzahl von zweiten Benutzern gleichen Profils vorhanden ist;
- einen Schritt (E8) der Bestimmung eines Zuordnungsdatenwerts betreffend den ersten Inhalt, abhängig vom Ergebnis eines Vergleichs, mit einer Schwelle, der Anzahl von Vorkommen der Art von gesammelten Informationen, die von der Syntheseinformation als für eine Anzahl von zweiten Benutzern gleichen Profils vorhanden angezeigt wird, wobei der Zuordnungsdatenwert für ein gegebenes Benutzerprofil den Teil des ersten Inhalts und einen zweiten zuzuordnenden Inhalt einander zuordnet,
- einen Schritt (E3) der Bestimmung eines einem Teil des ersten Inhalts zuzuordnenden zweiten Inhalts (C2) abhängig von einem Profil des ersten Benutzers mittels des Zuordnungsdatenwerts betreffend den ersten Inhalt;
- einen Schritt der Verteilung des ersten Inhalts, während dessen der zweite bestimmte Inhalt dem Teil des ersten Inhalts zugeordnet wird.

2. Verteilungsverfahren nach Anspruch 1, wobei im Schritt der Bestimmung des Zuordnungsdatenwerts betreffend den ersten Inhalt für einen gegebenen Teil des ersten Inhalts eine Anzahl von Vorkommen pro Art von gesammelten Informationen und pro Benutzerprofil bestimmt wird, wobei der Zuordnungsdatenwert bedingt durch das Ergebnis eines Vergleichs zwischen der Anzahl von Vorkommen und einer vorbestimmten Schwelle definiert wird.

3. Verteilungsverfahren nach Anspruch 1, wobei im Sammelschritt die zweiten Benutzer Beurteilungen als Informationen betreffend Teile des ersten Inhalts übertragen.

4. Verteilungsverfahren nach Anspruch 1, wobei im Sammelschritt eine Verteilungsvorrichtung, die den ersten Inhalt an einen der zweiten Benutzer verteilt hat, die Verteilung betreffende und vom zweiten Benutzer übertragene Steuerinformationen als Informationen betreffend gegebene Teile des ersten Inhalts überträgt.

5. System (1) zur Verteilung eines ersten Inhalts an einen ersten Benutzer, wobei ein Benutzerprofil mindestens ein Interessengebiet für den Benutzer enthält, wobei das System enthält:
- Mittel (304) zum Sammeln von Informationen betreffend mindestens einen Teil des ersten Inhalts, die nach einer Verteilung des ersten Inhalts an zweite Benutzer erarbeitet wurden;
- Mittel (306) zur Konsolidierung der gesammelten Informationen in einer dem ersten Inhalt zugeordneten Syntheseinformation, die für mindestens einen Teil des ersten Inhalts anzeigt, dass eine Art von gesammelten Informationen für eine Anzahl von zweiten Benutzern gleichen Profils vorhanden ist;
- Mittel (308) zur Bestimmung eines Zuordnungsdatenwerts, die eingerichtet sind, um einen Zuordnungsdatenwert betreffend den ersten Inhalt abhängig vom Ergebnis eines Vergleichs, mit einer Schwelle, der Anzahl von Vorkommen der Art von gesammelten Informationen, die durch die Syntheseinformation als für eine Anzahl von zweiten Benutzern gleichen Profils vorhanden angezeigt wird, zu bestimmen, wobei der Zuordnungsdatenwert für ein gegebenes Benutzerprofil den Teil des ersten Inhalts und einen zweiten zuzuordnenden Inhalt einander zuordnet;
- Mittel (202) für den Erhalt eines Profils des ersten Benutzers;
- Mittel (204) zur Bestimmung eines einem Teil des ersten Inhalts zuzuordnenden zweiten Inhalts abhängig vom Profil des ersten Benutzers mittels des Zuordnungsdatenwerts betreffend den ersten Inhalt;
- Mittel zur Verteilung des ersten Inhalts, die eingerichtet sind, um den ersten Inhalt und den dem Teil des ersten Inhalts zugeordneten zweiten Inhalt zu verteilen.

6. Verteilungssystem nach Anspruch 5, wobei ein Server (SAI, 300), der dazu bestimmt ist, einen Zuordnungsdienst eines zweiten Inhalts an einen gegebenen Teil eines ersten Inhalts zu liefern, enthält:
- die Mittel (304) zum Sammeln von Informationen;
- die Mittel (306) zur Konsolidierung der gesammelten Informationen in einer dem ersten Inhalt zugeordnete Syntheseinformation;
- die Mittel (308) zur Bestimmung eines Zuordnungsdatenwerts.

7. Verteilungssystem nach Anspruch 5, wobei eine Vorrichtung (S1, 200) zur Verteilung eines ersten Inhalts an einen Benutzer enthält:
- die Mittel (202) zum Erhalt eines Profils des Benutzers;
- die Mittel (204) zur Bestimmung eines einem Teil des ersten Inhalts zuzuordnenden zweiten Inhalts abhängig vom Profil des Benutzers mittels mindestens eines Zuordnungsdatenwerts betreffend den ersten Inhalt;
- die Mittel zur Verteilung des ersten Inhalts.

## Claims

1. Method for distribution of a first content (C1) to a first user (U1, U2), a user profile comprising at least one area of interest for said user, said method comprising:
- a step (E4) of collection of information relating to at least one portion of the first content, which information has been prepared following distribution of the first content to second users;
- a step of consolidation (E5, E6) of the collected information into a piece of summary information associated with the first content, indicating for at least one portion of the first content that a collected information type is present for a number of second users with an identical profile;
- a step (E8) of determination of an association data item relating to the first content, on the basis of the result of a comparison, with a threshold, of the number of occurrences of the collected information type that is indicated by the summary information as being present for a number of second users with an identical profile, said association data item associating, for a given user profile, said portion of the first content and a second content that is to be associated,
- a step (E3) of determination of a second content (C2) that is to be associated with a portion of the first content on the basis of a profile of the first user by means of said association data item relating to the first content;
- a step of distribution of the first content, during which the second determined content is associated with said portion of said first content.

2. Method for distribution according to Claim 1, in which the step of determination of the association data item relating to the first content involves, for a given portion of the first content, determining a number of occurrences by collected information type and by user profile, the association data item being defined conditionally with respect to the result of a comparison between the number of occurrences and a predetermined threshold.

3. Method for distribution according to Claim 1, in which the step of collection involves the second users transmitting assessments as information relating to portions of the first content.

4. Method for distribution according to Claim 1, in which the step of collection involves a distribution device that has distributed the first content to one of said second users transmitting control information relating to the distribution, which control information has been transmitted by said second user as information relating to given portions of the first content.

5. System (1) for distribution of a first content to a first user, a user profile comprising at least one area of interest for said user, said system comprising:
- means (304) for collecting information relating to at least one portion of a first content, which information has been prepared following distribution of the first content to second users;
- means (306) for consolidating the collected information into a piece of summary information associated with the first content, indicating for at least one portion of the first content that a collected information type is present for a number of second users with an identical profile;
- means (308) for determining an association data item, which are designed to determine an association data item relating to the first content on the basis of the result of a comparison, with a threshold, of the number of occurrences of the collected information type that is indicated by the summary information as being present for a number of second users with an identical profile, said association data item associating, for a given user profile, said portion of the content and a second content that is to be associated;
- means (202) for obtaining a profile of the first user;
- means (204) for determining a second content that is to be associated with a portion of the first content on the basis of the profile of the first user by means of the association data item relating to the first content;
- means for distributing the first content, which are designed to distribute the first content and the second content associated with the portion of said first content.

6. System for distribution according to Claim 5, in which a server (SAI, 300) that is intended to provide a service for associating a second content with a given portion of a first content comprises:
- the means (304) for collecting information;
- the means (306) for consolidating the collected information into a piece of summary information associated with the first content;
- the means (308) for determining an association data item.

7. System for distribution according to Claim 5, in which a device (S1,200) for distributing a first content to a user comprises:
- the means (202) for obtaining a profile of the user;
- the means (204) for determining a second content that is to be associated with a portion of the first content on the basis of the profile of the user by means of at least one association data item relating to the first content;
- the means for distributing the first content.
